# EUROPEAN PATENT APPLICATION

(11) **EP 3 905 030 A1**
(43) Date of publication of application: **03.11.2021**
(21) Application number: 21169933.5
(22) Date of filing: 22.04.2021
(51) Int. Cl.: G06F 8/34, G06F 9/451

(54) **SYSTEM FOR PROVIDING SOFTWARE DEVELOPMENT ENVIRONMENT, METHOD FOR PROVIDING SOFTWARE DEVELOPMENT ENVIRONMENT, AND NON-TRANSITORY COMPUTER READABLE MEDIUM**

(30) Priority: 27.04.2020 JP 2020078540
(71) Applicant: YOKOGAWA ELECTRIC CORPORATION, Musashino-shi Tokyo 180-8750 (JP)
(72) Inventor: ABE, Koh, Musashino-shi, Tokyo, 180-8750 (JP); PALANIRAJ, Alaguraja Pandian, Musashino-shi, Tokyo, 180-8750 (JP); TABATA, Hiroki, Musashino-shi, Tokyo, 180-8750 (JP)
(74) Representative: Winter, Brandl - Partnerschaft mbB

(57) **Abstract**

A system (10) for providing a software development environment provides an environment for developing software by combining a plurality of development components. The system (10) includes an information processing apparatus (30), which includes a display (35) and a controller (31). The display (35) is configured to display a user interface (200) on which a plurality of development components (501 to 511) is placed. The controller (31) is configured, upon receiving a setting information display request, to display setting information (601 to 611) for each development component (501 to 511) on the display (35) in association respectively with the plurality of development components (501 to 511).

## Description

### TECHNICAL FIELD

The present disclosure relates to a system for providing a software development environment, a method for providing a software development environment, and a non-transitory computer readable medium.

### BACKGROUND

Along with advances in technology pertaining to the Internet of Things (IOT), systems have been proposed for automatic control of various devices, sensors, and the like connected to a network in plants, factories, buildings, residences, and the like. For example, various systems (engineering systems) have been constructed in plants, factories, and the like, such as a distributed control system, a manufacturing execution system (MES), a plant information management system (PIMS), and an enterprise resource planning (ERP) system.

The development of software implemented in these engineering systems, such as applications, workflow, and programs, has been achieved using an apparatus installed in a plant, such as a programmable logic controller (PLC). Patent literature (PLT) 1, for example, proposes technology that, instead of installing a software development environment on a client terminal, accesses a server from the client terminal to enable coding of programs using the software development environment on the server.

### CITATION LIST

### Patent Literature

PTL 1: US8086664B2

### SUMMARY

In the technology of PTL 1, however, the program code under development needs to be edited using an editor provided by the server. The user interface of the editor is not necessarily very convenient. Furthermore, code needs to be written directly with the editor, thus requiring specialized knowledge and experience with programming languages and the like. This technology therefore does not enable all users to develop software easily. In other words, the user interface of the software development environment has room for improvement.

It would be helpful to provide a system for providing a software development environment, a method for providing a software development environment, and a non-transitory computer readable medium that can improve the convenience of the user interface of a software development environment.

A system for providing a software development environment in an embodiment is a system for providing a software development environment to develop software by combining a plurality of development components. The system includes an information processing apparatus that includes a display and a controller. The display is configured to display a user interface on which the plurality of development components is placed, and the controller is configured, upon receiving a setting information display request, to display setting information for each development component on the display in association respectively with the plurality of development components.

According to the system for providing a software development environment in an embodiment, an environment for developing software by combining a plurality of development components is thus provided. When the setting information display request is received, the controller displays the setting information for each development component on the display in association respectively with the plurality of development components. The user can thereby easily recognize the setting information for a plurality of development components by simply performing an operation related to the setting information display request. In other words, the convenience of the user interface of a software development environment can be improved by the system for providing a software development environment in an embodiment.

In an embodiment, the setting information displayed by the display may be a portion selected from among all settable information for the plurality of development components.

According to the system for providing a software development environment in an embodiment, the limitation of the displayed setting information to a selected portion of information in this way enables the user to easily recognize an overview of the setting information.

In an embodiment, the portion may include setting information related to the plurality of development components.

According to the system for providing a software development environment in an embodiment, the partial setting information that is displayed thus includes setting information related to the plurality of development components, enabling the user to easily recognize an overview of the setting information. The convenience of development when the setting information is changed for a plurality of development components can also be improved.

In an embodiment, the portion may include setting information selected based on user information.

According to the system for providing a software development environment in an embodiment, the partial setting information that is displayed thus includes setting information selected based on user information. This enables the user to recognize information customized for each user and can improve convenience for the user.

In an embodiment, the portion may include setting information selected based on a revision history of setting information.

According to the system for providing a software development environment in an embodiment, the partial setting information that is displayed thus includes setting information selected based on a revision history of setting information. This enables the user to recognize setting information and the like pertaining to the revision history in a timely manner and can improve convenience for the user.

In an embodiment, the controller may, based on a revision history of setting information, be configured to display a development component related to the revision history, or setting information for the development component, on the display with emphasis.

According to the system for providing a software development environment in an embodiment, a portion related to the revision history is thus displayed with emphasis based on the revision history of the setting information. This enables the user to more easily recognize a development component or setting information related to the revision history and can improve convenience for the user.

In an embodiment, the setting information displayed by the display may be displayed in accordance with a priority rank based on a revision history of setting information.

According to the system for providing a software development environment in an embodiment, setting information is thus displayed in accordance with a priority rank based on a revision history of setting information. This can improve convenience for the user. This configuration can also prevent program bugs and facilitate debugging.

A method for providing a software development environment according to an embodiment is a method for providing a software development environment to develop software by combining a plurality of development components and includes displaying a user interface on which the plurality of development components is placed, and displaying, upon receipt of a setting information display request, setting information for each development component in association respectively with the plurality of development components.

According to the method for providing a software development environment in an embodiment, an environment for developing software by combining a plurality of development components is thus provided. When the setting information display request is received, the setting information for each development component is displayed in association respectively with the plurality of development components. The user can thereby easily recognize the setting information for a plurality of development components by simply performing an operation related to the setting information display request. In other words, the convenience of the user interface of a software development environment can be improved by the method for providing a software development environment in an embodiment.

A non-transitory computer readable medium according to an embodiment stores a program, for providing a software development environment, that when executed by a processor causes the processor to execute operations including displaying a user interface on which a plurality of development components is placed, and displaying, upon receipt of a setting information display request, setting information for each development component in association respectively with the plurality of development components.

According to the non-transitory computer readable medium that stores the program for providing a software development environment in an embodiment, an environment for developing software by combining a plurality of development components is thus provided. When the setting information display request is received, the processor displays the setting information for each development component in association respectively with the plurality of development components. The user can thereby easily recognize the setting information for a plurality of development components by simply performing an operation related to the setting information display request. In other words, the convenience of the user interface of a software development environment can be improved by the non-transitory computer readable medium that stores a program for providing a software development environment in an embodiment.

According to the present disclosure, a system for providing a software development environment, a method for providing a software development environment, and a non-transitory computer readable medium that can improve technology related to the user interface of a software development environment can be provided.

### BRIEF DESCRIPTION OF THE DRAWINGS

In the accompanying drawings:
FIG. 1 is a functional block diagram of a system for providing a software development environment according to an embodiment of the present disclosure;
FIG. 2 is a diagram illustrating a user interface in the system for providing a software development environment according to an embodiment of the present disclosure;
FIG. 3 is a diagram illustrating development components having been placed in the user interface in the system for providing a software development environment according to an embodiment of the present disclosure;
FIG. 4 is a flowchart illustrating a method for providing a software development environment according to an embodiment of the present disclosure;
FIG. 5 is a diagram illustrating an overview of operations in the method for providing a software development environment according to an embodiment of the present disclosure;
FIG. 6 is a diagram illustrating an overview of operations in the method for providing a software development environment according to an embodiment of the present disclosure;
FIG. 7 is a diagram illustrating an overview of operations in the method for providing a software development environment according to an embodiment of the present disclosure; and
FIG. 8 is a diagram illustrating an overview of an example of emphasized display according to an embodiment of the present disclosure.

### DETAILED DESCRIPTION

A system 10 for providing a software development environment according to an embodiment of the present disclosure is described below with reference to the drawings.

Identical or equivalent portions in the drawings are labeled with the same reference signs. In the explanation of the present embodiment, a description of identical or equivalent portions is omitted or simplified as appropriate.

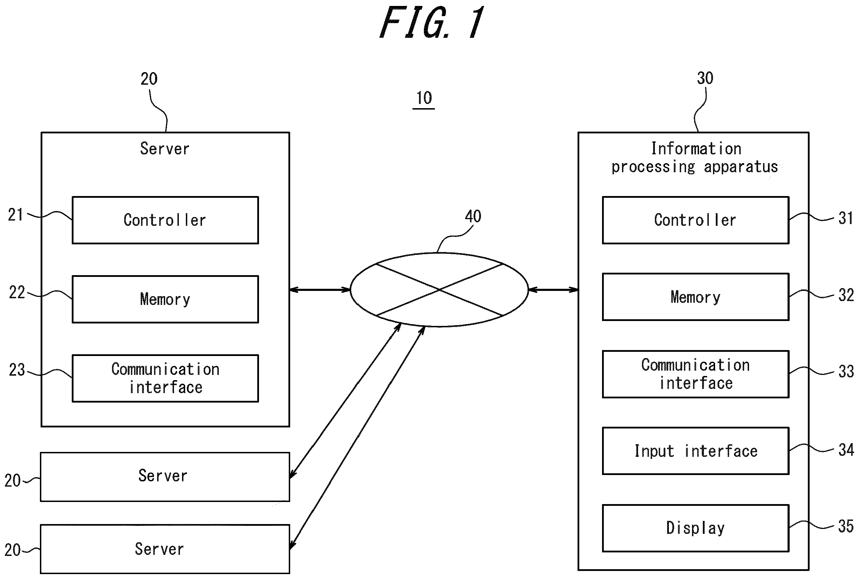

An overview and configuration of the system 10 for providing a software development environment according to the present embodiment are described with reference to FIGS. 1 to 3.

The system 10 for providing a software development environment according to the present embodiment includes a plurality of servers 20 and an information processing apparatus 30. The servers 20 and the information processing apparatus 30 are communicably connected to a network 40, such as a mobile communication network and/or the Internet. Each server 20 is, for example, installed in a data center or the like. Each server 20 is, for example, a server belonging to a cloud computing system or another computing system. In overview, the system 10 for providing a software development environment provides a user with an environment, for example on the cloud, for developing software by combining a plurality of development components. The user operates the information processing apparatus 30 to access the cloud, which is formed by the plurality of servers 20, using a web browser on the information processing apparatus 30, for example. The user can then develop software by combining a plurality of development components on an interface displayed by the web browser. The system 10 for providing a software development environment in FIG. 1 includes three servers 20, but this example is not limiting. The system 10 for providing a software development environment may include fewer than three servers 20 or may include four or more servers 20. The number of servers 20 may also be one.

The configurations of the server 20 and the information processing apparatus 30 according to the present embodiment are described below.

As illustrated in FIG. 1, the server 20 includes a controller 21, a memory 22, and a communication interface 23.

The controller 21 includes at least one processor, at least one dedicated circuit, or a combination thereof. The processor may, for example, be a general-purpose processor, such as a central processing unit (CPU) or graphics processing unit (GPU), or a dedicated processor specialized for particular processing. The dedicated circuit may, for example, be a field-programmable gate array (FPGA) or an application specific integrated circuit (ASIC). The controller 21 executes processing related to operation of the information processing apparatus 30 while controlling each component of the server 20.

The memory 22 includes at least one semiconductor memory, at least one magnetic memory, at least one optical memory, or a combination of at least two of these. The semiconductor memory is, for example, random access memory (RAM) or read only memory (ROM). The RAM is, for example, static random access memory (SRAM) or dynamic random access memory (DRAM). The ROM is, for example, electrically erasable programmable read only memory (EEPROM). The memory 22 functions as, for example, a main memory, an auxiliary memory, or a cache memory. The memory 22 stores data to be used for operation of the server 20 and data resulting from operation of the server 20.

The communication interface 23 includes at least one interface for communication with an external destination. The interface for communication may be an interface for wired communication or wireless communication. In the case of wired communication, the interface for communication may be a local area network (LAN) interface or a universal serial bus (USB), for example. In the case of wireless communication, the interface for communication may be an interface conforming to a mobile communication standard, such as Long Term Evolution (LTE), 4th Generation (4G), or 5th Generation (5G), or an interface conforming to short-range wireless communication such as Bluetooth® (Bluetooth is a registered trademark in Japan, other countries, or both). The communication interface 23 receives data for use in operation of the server 20 and transmits data resulting from operation of the server 20.

The functions of the server 20 are implemented by a processor corresponding to the controller 21 executing a program according to the present embodiment. In other words, the functions of the server 20 are implemented by software. The program causes a computer to function as the server 20 by causing the computer to execute the operations of the server 20. In other words, the computer functions as the server 20 by executing the operations of the server 20 in accordance with the program.

The program according to the present embodiment can be recorded on a computer readable recording medium. Computer readable recording media include non-transitory computer readable recording media, examples of which are a magnetic recording apparatus, an optical disc, a magneto-optical recording medium, and a semiconductor memory. The program is, for example, distributed by the sale, transfer, or lending of a portable recording medium such as a digital versatile disk (DVD) or a compact disk read only memory (CD-ROM) on which the program is recorded. The program may also be distributed by storing the program in the storage of an external server and transmitting the program from the external server to another computer. The program may also be provided as a program product.

A portion or all of the functions of the server 20 may be implemented by a dedicated circuit corresponding to the controller 21. In other words, a portion or all of the functions of the server 20 may be implemented by hardware.

The information processing apparatus 30 includes a controller 31, a memory 32, a communication interface 33, an input interface 34, and a display 35.

The controller 31 includes at least one processor, at least one dedicated circuit, or a combination thereof. The processor may be a general-purpose processor, such as a CPU or GPU, or a dedicated processor specialized for particular processing. The dedicated circuit is, for example, an FPGA or an ASIC. The controller 31 executes processing related to operation of the information processing apparatus 30 while controlling each component of the information processing apparatus 30.

The memory 32 includes at least one semiconductor memory, at least one magnetic memory, at least one optical memory, or a combination of at least two of these. The semiconductor memory is, for example, RAM or ROM. The RAM is, for example, SRAM or DRAM. The ROM is, for example, EEPROM. The memory 32 functions as, for example, a main memory, an auxiliary memory, or a cache memory. The memory 32 stores data to be used for operation of the information processing apparatus 30 and data resulting from operation of the information processing apparatus 30.

The communication interface 33 includes at least one interface for communication with an external destination. The interface for communication may be an interface for wired communication or wireless communication. In the case of wired communication, the interface for communication may be a LAN interface or a USB, for example. In the case of wireless communication, the interface for communication may be an interface conforming to a mobile communication standard, such as LTE, 4G, or 5G, or an interface conforming to short-range wireless communication such as Bluetooth®. The communication interface 33 receives data for use in operation of the information processing apparatus 30 and transmits data resulting from operation of the information processing apparatus 30.

The input interface 34 includes at least one interface for input. The interface for input is, for example, a physical key, a capacitive key, a pointing device, or a touchscreen integrally provided with a display. The input interface 34 receives an operation for inputting data used in operation of the information processing apparatus 30. Instead of being provided in the information processing apparatus 30, the input interface 34 may be connected to the information processing apparatus 30 as an external input device. Any appropriate connection method can be used, such as USB, High-Definition Multimedia Interface (HDMI®) (HDMI is a registered trademark in Japan, other countries, or both), or Bluetooth®.

The display 35 includes at least one interface for display output. The interface for output is, for example, a display. The display may, for example, be a liquid crystal display (LCD) or an organic electro luminescence (EL) display. The display 35 outputs data resulting from operation of the information processing apparatus 30 by displaying the data. Instead of being provided in the information processing apparatus 30, the display 35 may be connected to the information processing apparatus 30 as an external output device. Any appropriate connection method can be used, such as USB, HDMI®, or Bluetooth®.

The functions of the information processing apparatus 30 are implemented by a processor corresponding to the controller 31 executing a program according to the present embodiment. In other words, the functions of the information processing apparatus 30 are implemented by software. The program causes a computer to function as the information processing apparatus 30 by causing the computer to execute the operations of the information processing apparatus 30. In other words, the computer functions as the information processing apparatus 30 by executing the operations of the information processing apparatus 30 in accordance with the program.

The computer in the present embodiment temporarily stores, in the main memory, the program recorded on a portable recording medium or transferred from a server, for example. The computer uses a processor to read the program stored in the main memory and executes processing with the processor in accordance with the read program. The computer may read the program directly from the portable recording medium and execute processing in accordance with the program. Each time the program is received from an external server, the computer may sequentially execute processing in accordance with the received program. Processing may be executed by an application service provider (ASP) type of service that implements functions only via execution instructions and result acquisition, without transmission of the program from an external server to the computer. Examples of the program include an equivalent to the program represented as information provided for processing by an electronic computer. For example, data that is not a direct command for a computer but that has the property of specifying processing by the computer corresponds to the "equivalent to the program".

A portion or all of the functions of the information processing apparatus 30 may be implemented by a dedicated circuit corresponding to the controller 31. In other words, a portion or all of the functions of the information processing apparatus 30 may be implemented by hardware.

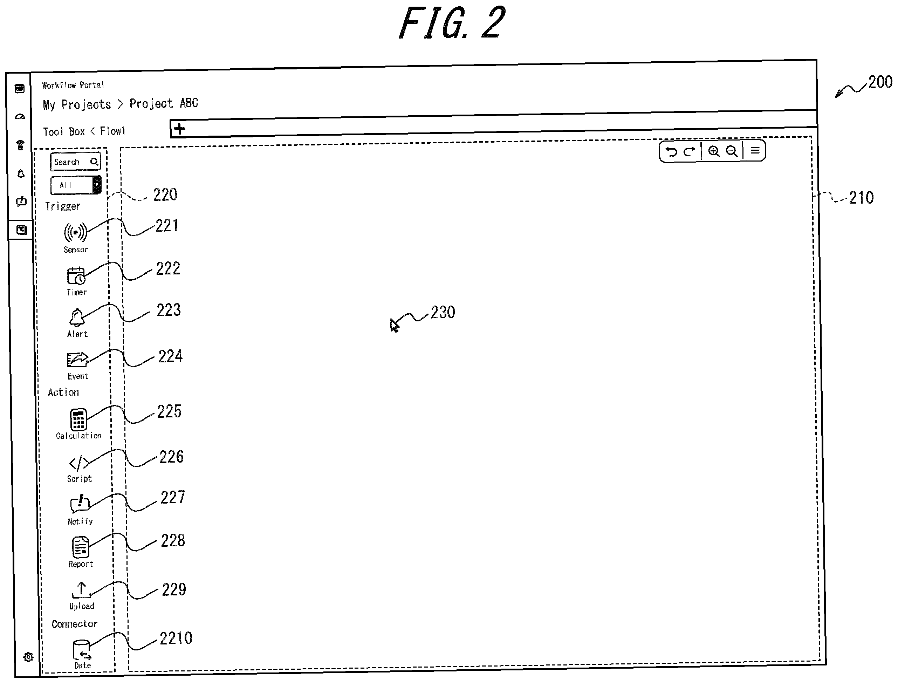

FIG. 2 illustrates an example of a user interface displayed on the display 35 of the information processing apparatus 30. The user operates the input interface 34 of the information processing apparatus 30 to access the server 20 via a web browser, for example. The user then develops software by combining a plurality of development components on the user interface displayed in the web browser. It is thus not necessary in the present embodiment to install an application or the like, on the information processing apparatus 30, that is specialized for the system 10 for providing a software development environment. In other words, as long as the information processing apparatus 30 includes a web browser application, the user can develop software by connecting to the server 20 from the information processing apparatus 30.

The user interface 200 illustrated in FIG. 2 includes a builder area 210 and a development component selection area 220. The builder area 210 is an area for a plurality of development components to be placed, connected, and the like. In other words, the user develops software by combining a plurality of development components in the builder area 210. The development component selection area 220 is an area for displaying a plurality of development components 221 to 230 placeable in the builder area 210.

The development components in the present embodiment are classified into types such as trigger, action, connector, and logic. The development components 221 to 224 illustrated in FIG. 2 are classified as triggers. The development components classified as triggers are components pertaining to the occurrence of some sort of event, such as the acquisition of a sensor value from a temperature sensor, humidity sensor, pressure sensor, or the like, the elapse of a predetermined length of time, or the occurrence of a predetermined alarm on a device. The development components 225 to 229 are classified as actions. The development components classified as actions are components pertaining to an operation, processing, or the like, such as calculation processing, notification, or uploading of data, that is performed when an event occurs. The development component 2210 illustrated in FIG. 2 is classified as a connector. The development components classified as connectors are components pertaining to information processing with an external resource, such as connection to a database, device, or the like and the addition, updating, deletion, etc. of information thereon. The development components classified as logic are components pertaining to the logical sum, filtering, or the like of input information. The user manipulates a pointer 230 using a mouse or the like to develop software on the user interface 200. For example, the user manipulates the pointer 230 to select a desired development component from the development component selection area 220 and then places, connects, etc. the selected, desired development component in the builder area 210.

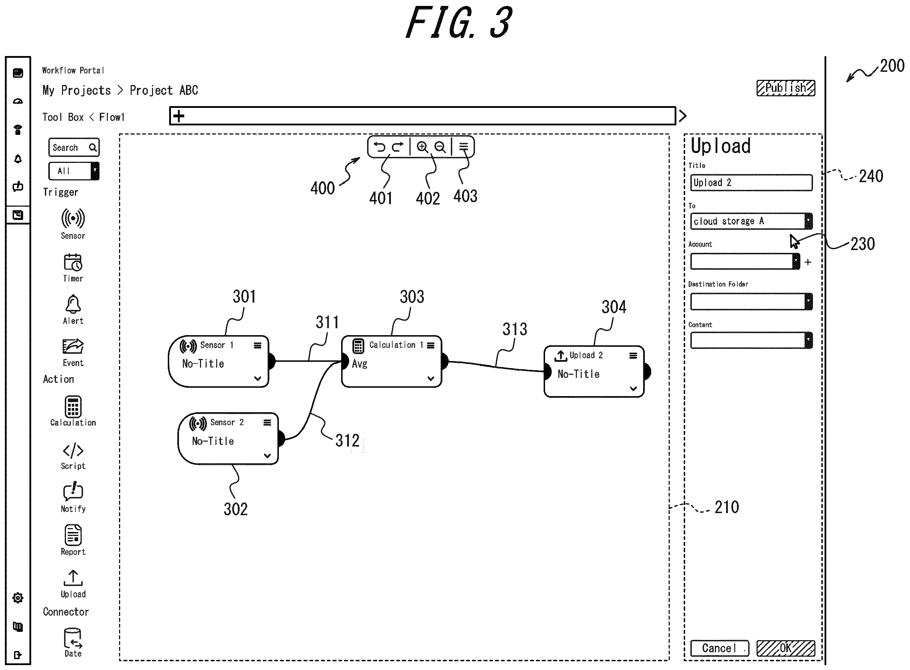

FIG. 3 is an example of a user interface displayed when a plurality of development components has been placed and connected in the builder area 210. The user interface 200 illustrated in FIG. 3 displays software for performing a predetermined calculation (here, for example, the calculation of an average) on sensor values acquired from two sensors and uploading the calculation result. The software is constructed by a plurality of development components 301 to 304. The plurality of development components 301 to 304 illustrated in FIG. 3 is connected by a connector 311, a connector 312, and a connector 313. The connector 311 indicates that the output of the development component 301 is the input of the development component 303. The connector 312 indicates that the output of the development component 302 is the input of the development component 303. The connector 313 indicates that the output of the development component 303 is the input of the development component 304. As illustrated in FIG. 3, the user interface 200 in FIG. 3 includes a property area 240 at a position adjacent to the builder area 210. The property area 240 is an area displaying settings and the like for a development component selected in the builder area 210. By selecting and setting various types of settings, variables, conditional expressions, and so forth (setting information) from pull-down menus or the like in the property area 240, the user defines various actions and the like for each development component. Use of the user interface 200 enables the user to develop software by placing and connecting development components and setting the setting information, with no need whatsoever for writing program code.

As described above, the user can select a development component in the builder area 210 and define setting information for the development component in the property area 240. Furthermore, when the setting information for a plurality of development components is displayed collectively, a control panel 400 can be used. The control panel 400 includes a button 401 for undo or redo, a button 402 for shrinking or zooming, and a function button 403. The button 401 is used to undo or redo an operation to place, change, delete, etc. a development component after the operation is performed. The button 402 is used to shrink or zoom in on the builder area 210. The function button 403 is used to call various functions. In overview, the user uses the function button 403 of the control panel 400 to collectively display setting information for a plurality of development components. In other words, the user can use the function button 403 to gain a bird's-eye view of the setting information for a plurality of development components.

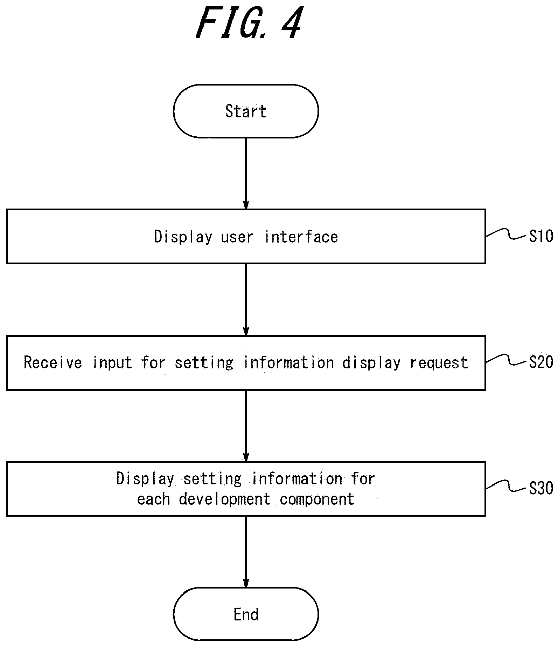

FIG. 4 is a flowchart illustrating operations by the system 10 for providing a software development environment, i.e. an example of a method for providing a software development environment. Here, an example of the user manipulating the mouse to collectively display the setting information for a plurality of development components is described.

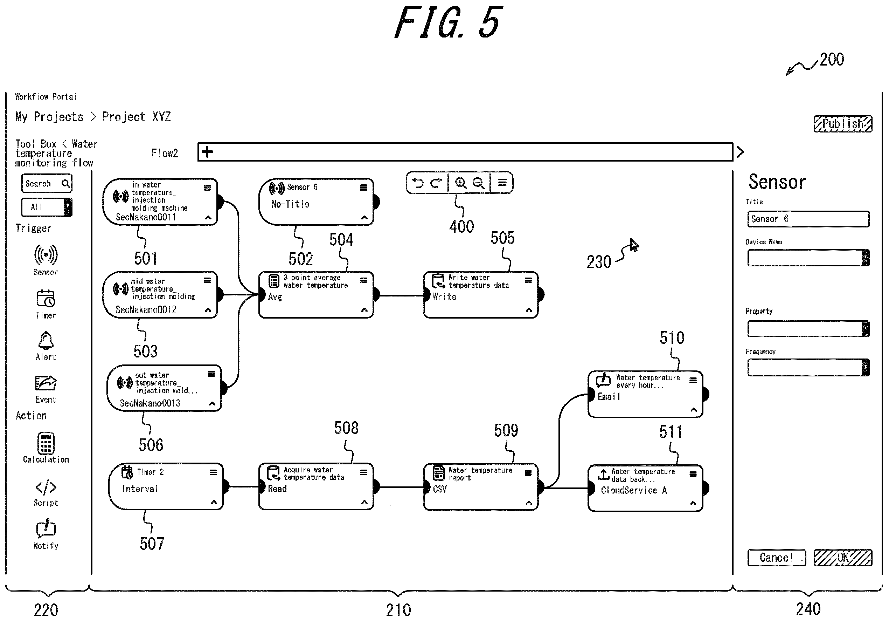

First, the controller 31 of the information processing apparatus 30 displays the user interface 200 on the display 35 (step S10). FIG. 5 is an example of the displayed user interface 200. As described above, the user interface 200 includes the builder area 210 and the development component selection area 220, which displays a plurality of development components placeable in the builder area 210. Here, a request to display the user interface 200 is based on an input operation from the user. For example, the controller 31 receives an input operation by the user on the web browser using the input interface 34. Upon receiving the input operation, the controller 31 communicates with the server 20 via the communication interface 33 and receives data pertaining to the user interface 200. The controller 31 then displays the user interface 200 on the display 35 based on the data. An authentication process or the like pertaining to the user may be performed by the server 20 and the information processing apparatus 30 as appropriate.

The user interface in FIG. 5 is displayed at the stage when the development components 501 to 511 have been selected by the user from the development component selection area 220, placed in the builder area 210, and connected by connectors.

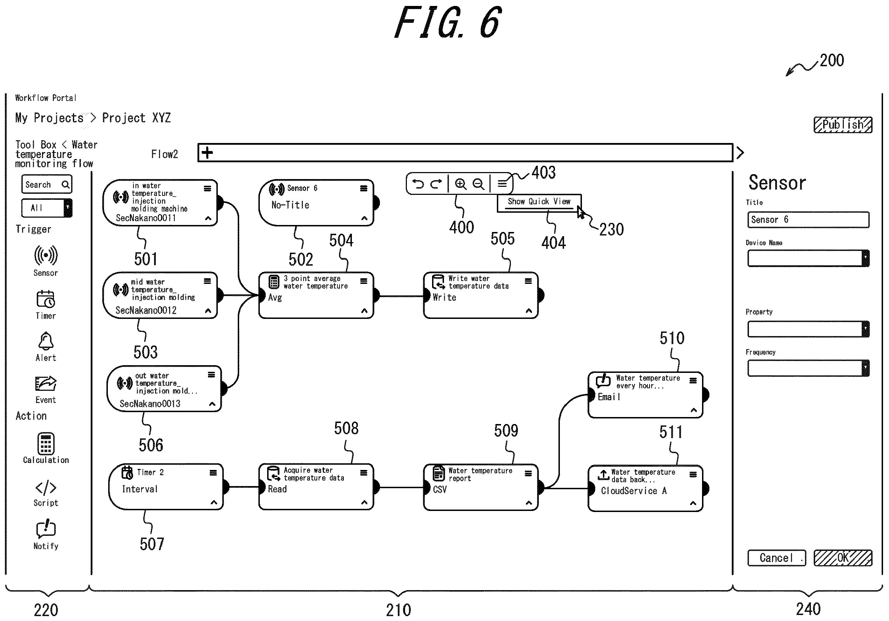

Next, the input interface 34 receives input for a request to display setting information (setting information display request) (step S20). The setting information display request is received based on an operation on the function button 403. Specifically, as illustrated in FIG. 6, a collective display menu 404 (show quick view) is displayed as a pull-down menu upon the pointer 230 being placed over the function button 403 by the mouse, for example. The input interface 34 receives a setting information display request based on a selection operation on the collective display menu 404. The selection operation on the collective display menu 404 includes an operation to press a mouse button while the pointer 230 is placed over the collective display menu 404, for example.

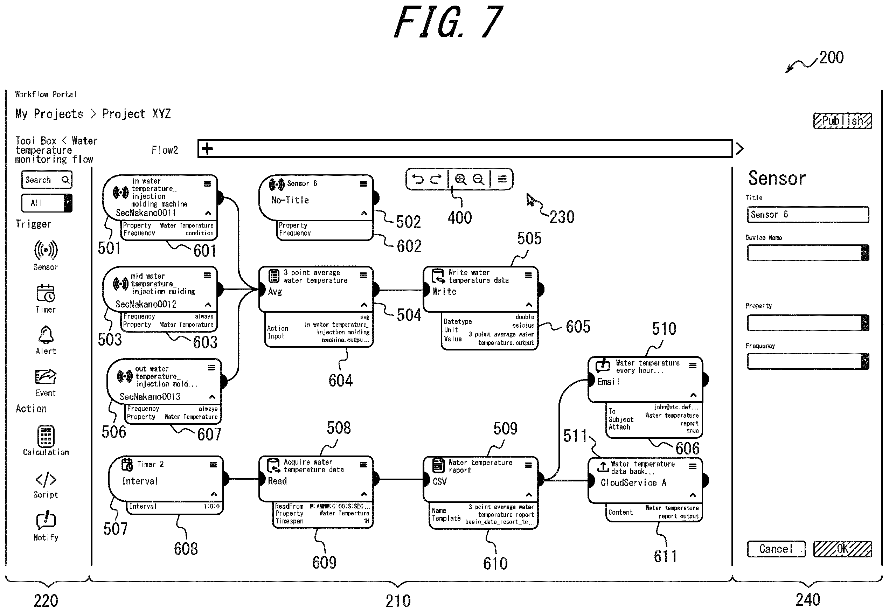

When the setting information display request is received, the controller 31 displays the setting information for each development component on the display 35 (step S30). FIG. 7 illustrates an overview of these operations. As illustrated in FIG. 7, the display 35 displays the setting information for each development component in association with the respective development component among the plurality of development components. Here, setting information 601 to 611 is associated with development components 501 to 511 respectively. In other words, the setting information 601 to 611 is placed adjacently below the development components 501 to 511 to indicate the correspondence relationship therebetween. The user can thereby gain a bird's-eye view of the setting information for a plurality of development components.

According to the system 10 for providing a software development environment in the present embodiment, an environment for developing software by combining a plurality of development components is thus provided. When the setting information display request is received, the controller 31 displays the setting information for each development component on the display 35 in association respectively with the plurality of development components. The user can thereby easily recognize the setting information for a plurality of development components by simply performing an operation related to the setting information display request. In other words, the convenience of the user interface of a software development environment can be improved by the system 10 for providing a software development environment in the present embodiment.

Although the present disclosure is based on embodiments and drawings, it is to be noted that various changes and modifications will be apparent to those skilled in the art based on the present disclosure. Therefore, such changes and modifications are to be understood as included within the scope of the present disclosure. For example, the functions and the like included in the components, steps, and the like may be reordered in any logically consistent way. Furthermore, components, steps, and the like may be combined into one or divided.

For example, in the above embodiment, the setting information 601 to 611 is placed adjacently below the development components 501 to 511, but this example is not limiting. The setting information 601 to 611 may be displayed at a surrounding location other than below the development components 501 to 511 or may be displayed in overlap with the development components 501 to 511. In other words, the setting information 601 to 611 may be displayed at any position that enables recognition of the correspondence relationship with the development components 501 to 511. When the setting information 601 to 611 is displayed, the positions of the development components 501 to 511 may be changed to facilitate viewing by the user. In other words, the system 10 for providing a software development environment may adjust the position of the development components 501 to 511 so that the development components 501 to 511 and the setting information 601 to 611 can be viewed simultaneously.

The setting information 601 to 611 may, for example, be a portion of all of the settable information for the development components 501 to 511. In other words, the setting information displayed when the setting information display request is received may be only a portion of the setting information selected from among all settable information for the plurality of development components. Limiting the collectively displayed setting information to a selected portion of information in this way enables the user to easily recognize an overview of the setting information.

The above-described partial information may, for example, include unset setting information. The unset setting information is, for example, information that needs to be set by the user and without which the program cannot be executed. For example, the "Property" and "Frequency" of the setting information 602 for the development component 502 in FIG. 7 are both unset. When the unset setting information is thus included in the collectively displayed setting information, the user can easily recognize the setting information that needs to be set. This configuration can also prevent program bugs and facilitate debugging.

The above-described partial information may, for example, include setting information related to a plurality of development components. The setting information related to a plurality of components is setting information, for a certain development component, that when changed affects at least one other development component. For example, the development component 505 is a component for writing data to a database. The "unit" of the setting information 605 for the development component 505 is setting information related to a plurality of development components. Specifically, the "unit" of the setting information 606 is setting information for a unit of temperature and is defined as Celsius, Kelvin, or Fahrenheit, for example. The development component 508 is a component for reading data from the database. A difference in the unit of the read data when data is read from the database can affect subsequent calculation, output, and the like. For example, the development component 509 is connected to the development component 508, and a process to output the data read by the development component 508 in csv format is defined for the development component 509. The unit of temperature in the setting information 605 for the development component 505 can have an effect when this process is defined for the development component 509. As another example, the development component 510 is connected to the development component 509, and a process to transmit e-mail in order to output the data in csv format, outputted by the development component 509, is defined for the development component 510. The unit of temperature in the setting information 605 for the development component 505 can have an effect when this process is defined for the development component 510. As another example, the development component 511 is connected to the development component 509, and a process to backup the data in csv format, outputted by the development component 509, to a cloud server is defined for the development component 511. The unit of temperature in the setting information 605 for the development component 505 can have an effect when this process is defined for the development component 511. By the inclusion of this setting information in the collectively displayed setting information, the convenience of development when the setting information is changed for a plurality of development components can also be improved. This configuration can also prevent program bugs and facilitate debugging.

The above-described partial information may, for example, be selected based on user information. The user information is any appropriate information for the user, such as authorization information or attribute information for the user, an operation history for the user, or the like. The authorization information is information defining the authorization of the user in the present system. For example, the authorization includes administrator authorization, user authorization, viewer authorization, or the like. The administrator authorization is authorization enabling any appropriate operation, such as viewing, editing, or deleting of information in the system, the use of programs, or the like. The user authorization is authorization that allows viewing of information in the system and the use of programs but restricts operations such as editing or deleting of information. The viewer authorization is authorization that allows viewing of information in the system but restricts editing and deleting of information. The collectively displayed setting information may, for example, differ in accordance with the authorization of the user. For example, all setting information may be displayed for a user with administrator authorization. A portion of the setting information may be hidden for a user with user authorization, for example. In other words, a portion of the collectively displayed setting information may include setting information selected based on the authorization information or the like for the user. A portion of the displayed setting information thus includes setting information selected based on user information. This configuration enables presentation of setting information customized for each user and can improve the convenience for the user.

The above-described partial information may, for example, be selected based on a revision history of setting information. In other words, a portion of the collectively displayed setting information may include setting information selected based on the revision history of setting information. The setting information selected based on the revision history may, for example, include setting information for the revision history up to a predetermined prior period, or setting information related to the setting information for the revision history up to a predetermined prior period. The setting information selected based on the revision history for the setting information may, for example, include setting information changed by another user. Suppose, for example, that another user changed the "unit" of the setting information 605 from Celsius to Kelvin. In this case, the "unit" of the setting information 605 is displayed when an operation for a setting information display request is received. On the other hand, when this information has not been updated for a certain period of time, the display of the "unit" of the setting information 605 may be omitted when an operation for a setting information display request is received. The setting information displayed when an operation for a setting information display request is received is thus selected based on a revision history of the setting information, thereby enabling easy recognition of setting information or other such information that needs to be set again, for example, as a result of a change in setting information. This configuration can also prevent program bugs and facilitate debugging.

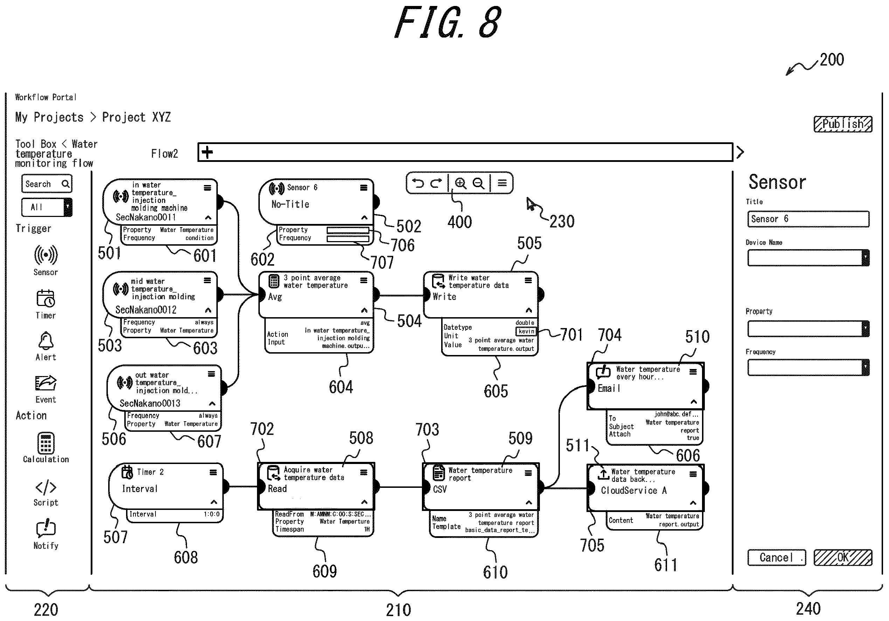

Based on a revision history of setting information, a development component related to the revision history, or setting information for the development component, may be displayed with emphasis, for example. FIG. 8 illustrates an example of the emphasized display. Suppose, for example, that the "unit" of the setting information 605 was changed from Celsius to Kelvin. In FIG. 8, the development components related to the revision history and the setting information for the development components are displayed with emphasis. Specifically, a frame 701 is attached to the setting value of the "unit" for the revision history. Frames 702 to 705 displayed with emphasis are also attached to the outer frame of the development components 508 to 511 related to the setting information. Based on the revision history of the setting information, a portion related to the revision history is thus displayed with emphasis. This enables easier recognition of a development component or setting information related to the revision history in a timely manner and can improve convenience for the user. This configuration can also prevent program bugs and facilitate debugging. Unset setting information may also be displayed with emphasis, for example. In FIG. 8, a frame 706 and a frame 707 are displayed in the blanks for setting information 602, which is unset setting information. Setting information that the user needs to set, setting information the user forgot to set, and the like can thereby easily be recognized. This configuration can also prevent program bugs and facilitate debugging.

The form of the emphasized display is not limited to the above-described example. For example, the display may be emphasized by appropriately changing any parameter such as brightness, the shade of the display color, contrast, or a combination thereof for at least a portion of the display component or setting information. Apart from changing these parameters, the display may also be emphasized by any form that stands out visually as compared to other objects.

The setting information displayed by the display 35 may, for example, be displayed in accordance with a priority rank based on a revision history of setting information. The priority rank is, for example, set to be higher as the frequency of revision is higher as based on a revision history of the setting information. The frequency of revision may be based on the revision history of each login user or based on the revision history of a plurality of users. The priority rank may be determined by machine learning. The correlation between the history of revisions to the setting information by the user and the probability of occurrence of bugs may be used in the machine learning. Any appropriate algorithm for machine learning may be used, such as a convolutional neural network (CNN), a recurrent neural network (RNN), or deep learning. Based on the determined priority rank, the display 35 may, for example, display only the setting information for a predetermined number of categories in order from the highest priority rank. Setting information is thus displayed in accordance with a priority rank based on a revision history of setting information. This configuration can improve the viewability of setting information with a high priority rank and can improve convenience for the user. This configuration can also prevent program bugs and facilitate debugging.

In the present embodiment, the pointer 230 is manipulated by a mouse, but this example is not limiting. For example, the pointer 230 may be manipulated by a physical key, a capacitive key, a pointing device other than a mouse, a touchscreen provided integrally with a display, or the like.

The information processing apparatus 30 has been described as accessing the server 20 via a web browser in the present embodiment to provide the user with a software development environment, but this example is not limiting. For example, an application according to the system 10 for providing a software development environment may be installed on the information processing apparatus 30, and a software development environment may be provided to the user by communication with the server 20 via the application.

## Claims

1. A system (10) for providing a software development environment to develop software by combining a plurality of development components (501 to 511), the system comprising an information processing apparatus (30) that includes a display (35) and a controller (31), wherein
the display (35) is configured to display a user interface (200) on which the plurality of development components (501 to 511) is placed, and
the controller (31) is configured, upon receiving a setting information display request, to display setting information for each development component (501 to 511) on the display (35) in association respectively with the plurality of development components (501 to 511).

2. The system (10) for providing a software development environment of claim 1, wherein the setting information displayed by the display (35) is a portion selected from among all settable information for the plurality of development components (501 to 511).

3. The system (10) for providing a software development environment of claim 2, wherein the portion includes setting information related to the plurality of development components (501 to 511).

4. The system (10) for providing a software development environment of claim 2 or 3, wherein the portion includes setting information selected based on user information.

5. The system (10) for providing a software development environment of any one of claims 2 to 4, wherein the portion includes setting information selected based on a revision history of setting information.

6. The system (10) for providing a software development environment of any one of claims 1 to 5, wherein based on a revision history of setting information, the controller (31) is configured to display a development component related to the revision history, or setting information for the development component, on the display (35) with emphasis.

7. The system (10) for providing a software development environment of any one of claims 1 to 6, wherein the setting information displayed by the display (35) is displayed in accordance with a priority rank based on a revision history of setting information.

8. A method for providing a software development environment to develop software by combining a plurality of development components (501 to 511), the method comprising:
displaying a user interface (200) on which the plurality of development components (501 to 511) is placed; and
displaying, upon receipt of a setting information display request, setting information for each development component (501 to 511) in association respectively with the plurality of development components (501 to 511).

9. The method for providing a software development environment of claim 8, further comprising displaying the setting information as a portion selected from among all settable information for the plurality of development components (501 to 511).

10. The method for providing a software development environment of claim 9, wherein the portion includes setting information related to the plurality of development components (501 to 511).

11. The method for providing a software development environment of claim 9 or 10, wherein the portion includes setting information selected based on user information.

12. The method for providing a software development environment of any one of claims 9 to 11, wherein the portion includes setting information selected based on a revision history of setting information.

13. The method for providing a software development environment of any one of claims 8 to 12, further comprising displaying, based on a revision history of setting information, a development component related to the revision history, or setting information for the development component, with emphasis.

14. The method for providing a software development environment of any one of claims 8 to 13, further comprising displaying the setting information in accordance with a priority rank based on a revision history of setting information.

15. A non-transitory computer readable medium storing a program, for providing a software development environment, that when executed by a processor causes the processor to execute operations comprising:
displaying a user interface (200) on which a plurality of development components (501 to 511) is placed; and
displaying, upon receipt of a setting information display request, setting information for each development component (501 to 511) in association respectively with the plurality of development components (501 to 511).
